(19) Europäisches Patentamt
European Patent Office
Office européen des brevets

(11) **EP 2 997 242 B1**

(12) **EUROPÄISCHE PATENTSCHRIFT**

(45) Veröffentlichungstag und Bekanntmachung des Hinweises auf die Patenterteilung:
**06.07.2016 Patentblatt 2016/27**

(21) Anmeldenummer: **14721337.5**

(22) Anmeldetag: **30.04.2014**

(51) Int Cl.:
***F01N 9/00*** *(2006.01)*

(86) Internationale Anmeldenummer:
**PCT/EP2014/058798**

(87) Internationale Veröffentlichungsnummer:
**WO 2014/183998 (20.11.2014 Gazette 2014/47)**

(54) **VERFAHREN ZUR ERMITTLUNG EINER RUSSBELADUNG EINES PARTIKELFILTERS, STEUEREINHEIT SOWIE KRAFTFAHRZEUG**

METHOD FOR DETERMINING A SOOT LOAD IN A PARTICULATE FILTER, A CONTROL UNIT, AND A MOTOR VEHICLE

PROCÉDÉ DE DÉTERMINATION DE LA CHARGE EN SUIES D'UN FILTRE À PARTICULES, UNITÉ DE COMMANDE ET VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.05.2013 DE 102013008426**

(43) Veröffentlichungstag der Anmeldung:
**23.03.2016 Patentblatt 2016/12**

(73) Patentinhaber: **Volkswagen Aktiengesellschaft 38440 Wolfsburg (DE)**

(72) Erfinder:
• SCHLÜTER, Lars
38458 Velpke (DE)
• PAUKNER, Stefan
38442 Wolfsburg (DE)
• BARON VON CEUMERN-LINDENSTJERNA, Falk-Christian
38124 Braunschweig (DE)
• HUPFELD, Bernd
38518 Gifhorn (DE)

(56) Entgegenhaltungen:
**WO-A2-2006/055992      AT-A1- 501 102**

EP 2 997 242 B1

**Beschreibung**

Die Erfindung betrifft ein Verfahren zur Ermittlung einer Rußbeladung eines einer Brennkraftmaschine nachgeschalteten Partikelfilters. Die Erfindung betrifft ferner eine Steuereinheit, die zur Ausführung des Verfahrens eingerichtet ist, sowie ein Kraftfahrzeug mit einer solchen.

Neben gasförmigen Schadstoffen verbrennungsmotorischer Abgase stehen auch partikuläre Bestandteile des Abgases (Ruß) im Fokus der Abgasnachbehandlungstechnologien. Dies gilt bereits seit langem für Dieselmotoren, während die Partikelentfernung aus ottomotorischen Abgasen erst in jüngerer Zeit diskutiert wird. So schreibt die kommende europäische Abgasnorm Euro 6 neben dem Grenzwert für die Partikelmasse (PM) erstmalig einen Grenzwert für die Partikelanzahl (PN) für Ottomotoren vor. Die Einhaltung dieses Grenzwerts wird in vielen Kraftfahrzeugmodellen der Einsatz eines Ottopartikelfilters (OPF) erfordern.

Wenn auch in wesentlich geringerem Umfang als bei Dieselmotoren erfolgt auch im Fahrbetrieb von Ottomotoren eine Beladung des Filters mit Ruß (Ottoruß). Damit der Abgasgegendruck nicht zu weit ansteigt, muss der Partikelfilter kontinuierlich oder periodisch regeneriert werden. Dies erfolgt insbesondere im Wege einer thermischen Oxidation der Rußpartikel, wozu neben einem ausreichenden Temperaturniveau gleichzeitig das Vorliegen eines ausreichenden Restsauerstoffgehalts im Abgas erforderlich ist. Bei Ottomotoren, die überwiegend mit einem stöchiometrischen Luftverhältnis ($\lambda = 1$) ohne Sauerstoffüberschuss betrieben werden, sind zur Bereitstellung des Sauerstoffs besondere Maßnahmen erforderlich. Hier kommen insbesondere die Magerverstellung des Motors ($\lambda > 1$) oder die Eindüsung von Sekundärluft in die Abgasanlage stromauf des Partikelfilters in Frage.

Aktive Regenerationsvorgänge mit Heizmaßnahmen sind unweigerlich mit einem erhöhten Kraftstoffverbrauch verbunden und verursachen zudem eine erhöhte thermische Belastung der in der Abgasanlage verbauten Komponenten. Daher wird angestrebt, die Regenerationsvorgänge nicht häufiger als notwendig durchzuführen sowie eine zu hohe Beladung aus Bauteilschutzgründen zu vermeiden. Daher ist eine möglichst genaue Kenntnis der Beladung des Partikelfilters mit Ruß, d.h. die eingespeicherte Rußmenge, wünschenswert. Da dieser Wert im Fahrbetrieb nicht direkt messtechnisch ermittelt werden kann, werden im Stand der Technik verschiedene Modelle herangezogen.

Öffentlich benutzte Lösungen zur Ermittlung der Rußbeladung von Ottopartikelfiltern existieren nicht, da derzeit noch keine Partikelfilter in Abgasanlagen von Ottomotoren verbaut sind. Modelle, die für Dieselpartikelfilter Einsatz finden, verfolgen den Rußmassenstromansatz. Dabei wird der Rußeintrag in den Filter in der Regel mit Modellen bestimmt, welche die aktuelle Rußrohemission des Dieselmotors als Rußmassenstrom kontinuierlich kennfeldbasiert ableiten und zu einem kumulierten Wert aufsummieren (integrieren). Neben dem beladungserhöhenden Rußeintrag wird zudem der beladungsmindernde Rußumsatz im Partikelfilter infolge von Regenerationsvorgängen ermittelt. Die Summe aus Rußeintrag und Rußumsatz ergibt dann die Rußbeladung. Neben der rechnerischen Ermittlung der Rußbeladung, ist zudem bekannt den Differenzdruck stromauf und stromab des Filters zu messen und einen kritischen Druckabfall über den Filter als Auslöser für seine Regeneration zu verwenden.

DE 199 61 159 A1 beschreibt die Ermittlung einer Rußbeladung eines Dieselmotors. Hierzu wird für jedes Zeitintervall eine aktuelle durchgesetzte Rußmasse in Abhängigkeit mindestens eines aktuellen Betriebsparameters des Motors bestimmt und die aktuelle Rußmasse über alle Zeitintervalle kontinuierlich aufsummiert (integriert). Als Betriebsparameter des Motors werden insbesondere Motordrehzahl, Luftmasse und/oder Kraftstoffmasse bestimmt.

In DE 10 2011 109 068 A1 wird eine Regeneration eines Partikelfilters eines Ottomotors ausgelöst, wenn eine modellierte Rußbeladung und/oder eine Druckdifferenz über dem Filter eine Schwelle erreicht. Die Rußbeladung wird in Abhängigkeit verschiedener Parameter wie Fahrzeugleistung (Fahrdauer, Abgasmenge), Abgasdruck oder Abgasdruckabfall über dem Filter modelliert.

Gemäß DE 100 14 224 A1 wird der Beladungszustand eines Dieselpartikelfilters in Abhängigkeit von der Motordrehzahl und der Kraftstoffmenge und optional von der Temperatur des Abgasnachbehandlungssystems modelliert. Zusätzlich zu dieser Modellierung kann der Beladungszustand über Differenzdruckmessung über den Filter erfolgen, um somit eine Fehlerüberwachung zu gewährleisten.

Im Dokument DE 10 2010 028 852 A1 wird ein Verfahren zur Diagnose eines Abgasreinigungssystems, beispielsweise eines Partikelfilters, beschrieben, in welchem für verschiedene Fahrzyklusklassen, die mit unterschiedlichen Emissionen verbunden sind, unterschiedliche Grenzwerte für die betrachtete Abgaskomponente, beispielsweise Partikel, festgelegt werden. Während des Betriebes der Brennkraftmaschine wird anhand aktueller Betriebsparameter die aktuelle Konzentration der Abgaskomponente bestimmt und mit dem entsprechenden Grenzwert verglichen, so dass bei Überschreiten des Grenzwerts eine Fehlfunktion erkannt wird.

DE 10 2010 054 414 A1 betrifft ein Verfahren zum Ermitteln der Beladung eines Partikelfilters eines Fahrzeugs. Zu diesem Zweck wird das Fahrzeug in einem vorgegebenen Fahrzyklus kontinuierlich betrieben, der Partikelfilter dann ausgebaut und gewogen. Anschließend erfolgt ein Abbrenne der Rußpartikel (Regeneration) und ein erneutes Wiegen des Partikelfilters. Die sich aus einer solchen Differenzwägung ergebende tatsächliche Rußmenge wird mit einer modellierten Rußmenge verglichen. Ein Abweichen der gemessenen und modellierten Rußmenge hat eine Anpassung des Modells zur Folge. Die Vorgehensweise kann für unterschiedliche Fahrzyklen, die unterschiedliche Einsatzfälle nachbilden sollen, wiederholt werden.

Im Dokument DE 60 2004 008 862 T2 wird ein Verfahren zur Ermittlung einer Partikelfilterbeladung, das parallel zwei Modelle benutzt, ein statistisches Modell sowie ein physikalisches Modell. Das physikalische Modell ermittelt die im Filter eingelagerte Partikelmenge auf der Basis gemessener Parameter, beispielsweise der Abgastemperatur, des Druckabfalls über dem Filter sowie dem Abgasmassenstrom. Das statistische Modell schätzt die eingelagerte Partikelmasse auf der Grundlage der Motorbetriebspunkte und kumuliert diese. Anhand der mit dem statistischen Modell ermittelten Partikelmasse werden ein oberer und ein unterer Grenzwert festgelegt und die mit dem physikalischen Modell ermittelte Partikelmasse mit diesen Grenzwerten verglichen. Der Ausgangswert dieses Vergleichs wird mit einem Grenzwert verglichen, bei dessen Überschreitung eine Regeneration ausgelöst wird.

Aus den Dokumenten AT 501 102 A1 beziehungsweise WO 2006/055992 A2 gehen Verfahren zum Ermitteln des Partikeleintrages in einen Partikelfilter beziehungsweise der Partikelemissionen im Abgasstrom einer Brennkraftmaschine hervor. Die Abschätzung des Rußeintrages wird korrigiert um die Reduzierung des Rußes durch die Umsetzung mit Sauerstoff aus Stickoxiden (CRT-Effekt), welcher insbesondere bei Dieselmotoren in schweren Nutzfahrzeugmotoren eine nicht unerhebliche Rolle spielt.

Der Erfindung liegt die Aufgabe zugrunde, ein Verfahren zur Ermittlung einer Rußbeladung eines Partikelfilters, insbesondere für einen Ottopartikelfilter (OPF), vorzuschlagen, das die Rußbeladung mit einer hinreichenden Genauigkeit bestimmt und gleichzeitig einfach durchzuführen und robust ist.

Diese Aufgabe wird durch ein Verfahren, eine Steuereinheit sowie ein Kraftfahrzeug mit den Merkmalen der unabhängigen Ansprüche gelöst.

Das erfindungsgemäße Verfahren ermittelt die Rußbeladung eines einer Brennkraftmaschine nachgeschalteten Partikelfilters in Abhängigkeit von einer eingetragenen Rußmenge. Erfindungsgemäß ist nun vorgesehen, dass die Ermittlung der eingetragenen Rußmenge eine Erfassung und Berücksichtigung ausschließlich rußemissions-relevanter Ereignisse, insbesondere nur einer Auswahl sämtlicher rußemissions-relevanter Ereignisse der Brennkraftmaschine, umfasst. Dabei werden im Rahmen der vorliegenden Erfindung unter "rußemissions-relevanten Ereignissen" solche Ereignisse verstanden, die in einem standardisierten Fahrzyklus einen vorbestimmten Mindestanteil von Rußemission an einer insgesamt von der Brennkraftmaschine emittierten Rußemission verursachen, wobei der Mindestanteil von Rußemission der rußemissions-relevanten Ereignisse geringer als die insgesamt emittierte Rußemission ist. Mit anderen Worten, es findet eine selektive Berücksichtigung einzelner und keine kontinuierliche Erfassung aller rußemissions-relevanter Ereignisse statt.

Konkret werden insbesondere nur solche Ereignisse erfasst werden, welche insgesamt einen Hauptanteil oder signifikanten Anteil an der gesamte von der Brennkraftmaschine emittierten Rußemission bilden: Insbesondere werden solche Ereignisse berücksichtigt, die - insbesondere zusammengenommen - mindestens 90 %, vorzugsweise mindestens 95 % der in einem standardisierten Fahrzyklus insgesamt von der Brennkraftmaschine emittierten, massenbezogenen Rußemissionen verursachen.

Erfindungsgemäß erfolgt somit, anders als im Stand der Technik, keine kontinuierliche Ermittlung der Rußrohemissionen der Brennkraftmaschine. Vielmehr werden solche Ereignisse erfasst und berücksichtigt, die einen signifikanten Beitrag zur Gesamtrußrohemission liefern. Die vorliegenden Erfinder haben nämlich erkannt, dass die für Dieselbrennkraftmaschinen bekannten Modelle, welche die eingetragene Rußmenge kontinuierlich z.B. in Abhängigkeit von dem Betriebspunkt des Motors modellieren, für Ottomotoren nicht geeignet sind, da hier die Rußemissionen wesentlich geringer und schlechter reproduzierbar sind und von vielen unbekannten Einflussfaktoren abhängen. Zudem wurde gefunden, dass die eingetragene Rußmenge des Partikelfilters im Wesentlichen von wenigen bestimmten Betriebssituationen verursacht werden. Erfindungsgemäß wird daher keine kontinuierliche Rußemission des Motors modelliert, sondern die als relevant hinsichtlich der Rußemission identifizierten Ereignisse werden gezählt und berücksichtigt. Dieses Strategie hat sich als einfach und ausreichend genau erwiesen.

Erfindungsgemäß werden für die Ermittlung der eingetragenen Rußmenge ausschließlich solche rußemissions-relevante Ereignisse erfasst und berücksichtigt, die in einem standardisierten Fahrzyklus einen vorbestimmten Mindestanteil an einer insgesamt von der Brennkraftmaschine emittierten Rußemission verursachen. Auf diese Weise wird eine Vereinfachung des Verfahrens erzielt, während gleichzeitig eine überraschend präzise Ermittlung der Rußbeladung erhalten wird.

Nach einer vorteilhaften Ausgestaltung der Erfindung umfassen die in der Ermittlung der eingetragenen Rußmenge berücksichtigten rußemissions-relevanten Ereignisse einen Motorstart, vorzugsweise unter Berücksichtigung eines anschließenden Warmlaufs, und/oder eine Hochlastsituation. Insbesondere können mehrere, bevorzugt sämtliche Motorstarts und/oder mehrere, bevorzugt sämtliche Hochlastsituationen berücksichtigt werden. In besonders praktischen Ausführungsformen können die rußemissions-relevanten Ereignisse nur aus den Motorstarts und/oder den Hochlastsituationen bestehen.

Dabei wird unter Hochlastsituation ein Betriebspunkt der Brennkraftmaschine verstanden, bei dem diese bei gegebener Drehzahl zumindest 70 %, vorzugsweise zumindest 80 % des maximal möglichen Drehmoments bereitstellt. In besonders bevorzugter Ausführung der Erfindung werden ausschließlich Motorstartereignisse, vorzugsweise unter Berücksichtigung des anschließenden Warmlaufs, als rußemissions-relevante Ereignisse berücksichtigt. Es hat sich nämlich erwiesen, dass allein bei Berücksichtigung der Motorstartereignisse die Rußbeladung mit bereits hoher Genauigkeit ermittelt werden kann. Auf diese Weise ergibt sich eine weitere Vereinfachung des Modells.

Vorzugsweise wird dem rußemissions-relevanten Ereignis ein Rußwert zugeordnet und diese Rußwerte zur Ermittlung der in den Filter eingetragenen Rußmenge (Rußeintrag) aufsummiert. Dabei handelt es sich bei dem Rußwert um einen fest vorgegebenen Wert, bei dem es sich um eine Rußmasse oder, bevorzugt, um eine dimensionslose Kennzahl handelt. Die Höhe des Rußwerts bestimmt sich dabei allein nach Art des rußemissions-relevanten Ereignisses. Beispielsweise kann einem Motorstart der Rußwert 1 und einer Hochlastsituation der Rußwert 0,1 zugeordnet werden.

In bevorzugter Ausgestaltung wird der Rußwert vor seiner Aufsummierung gewichtet, wobei die Gewichtung in Abhängigkeit von Umgebungsparametern und/oder Betriebszuständen der Brennkraftmaschine bestimmt wird. Durch die Gewichtung werden die erfassten rußemissions-relevanten Ereignisse somit in besonders stark Ruß verursachende oder weniger stark Ruß verursachende Ereignisse klassifiziert, wodurch das Verfahren noch weiter an Präzision gewinnt. Als Umgebungsparameter und/oder Betriebszustände der Brennkraftmaschine, welche einen merkbaren Einfluss auf die Rußrohemission ausüben, haben sich die Motortemperatur, insbesondere zum Zeitpunkt des Motorstarts (Motorstarttemperatur), und/oder die Umgebungstemperatur erwiesen. Weitere Parameter und/oder Zustände, die als Maß für die Gewichtung des Rußwerts betrachtet werden können, umfassen ein Lastkollektiv (d.h. die Anforderung an den Motor, definiert durch Drehzahl und Last), insbesondere während der dem Motorstart anschließenden Warmlaufphase, ein Verbrennungsluftverhältnis, insbesondere während der Warmlaufphase, und/oder eine Qualität des verwendeten Kraftstoffs. Die meisten der vorgenannten Umgebungsparameter und Betriebszustände werden bereits heute standardmäßig erfasst oder ermittelt, so dass ihre Bestimmung im Rahmen der Erfindung keine zusätzliche Sensorik erfordert. Vorzugsweise wird zu jedem berücksichtigten Umgebungsparameter oder Betriebszustand der Brennkraftmaschine eine Kennlinie oder ein Kennfeld hinterlegt, woraus die Gewichtung in Form eines auf den Rußwert anzuwendenden Faktors ermittelt wird.

Der gemäß den vorstehenden Ausführungen ermittelte, beladungserhöhende Rußeintrag beschreibt nur die in den Partikelfilter eingetragene Rußmenge. Vorzugsweise wird zur Modellierung der (absoluten) Rußbeladung des Partikelfilters ferner die im Partikelfilter umgesetzte Rußmenge (Rußaustrag) bestimmt, welche sich beladungsmindernd auswirkt. Dieser Rußaustrag wird im Wesentlichen durch einen aktiv eingeleiteten oder durch die Betriebssituation passiv bedingten Partikelabbrand verursacht. Der Rußaustrag kann grundsätzlich mit einem herkömmlichen Verfahren entweder messtechnisch ermittelt werden, beispielsweise über Differenzdruckmessung, oder modellbasiert berechnet werden. Für die modellbasierte Ermittlung werden verschiedene Parameter gemessen oder kennfeldbasiert modelliert und die im Filter umgesetzte (abgebrannte) Rußmenge wird in Abhängigkeit von den Parametern bestimmt, wofür wiederum Kennfelder verwendet werden können. Insbesondere werden als Parameter, welche den Rußumsatz im Partikelfilter maßgeblich beeinflussen, berücksichtigt: Filtertemperatur und/oder Abgastemperatur, die Abgaszusammensetzung vor Filter ($O_2$, $CO$, $H_2O$ und/oder $CO_2$) und/oder der Abgasmassenstrom und/oder Abgasvolumenstrom. Jeder der vorgenannten Parameter kann gemessen oder betriebspunktabhängig modelliert werden. In besonders bevorzugter Ausführung der Erfindung wird die im Partikelfilter umgesetzte Rußmenge, das heißt der Rußaustrag, ähnlich wie der Rußeintrag ereignisbasiert modelliert, wobei ausschließlich rußumsatz-relevante Ereignisse berücksichtigt werden. Vorzugsweise werden hier nur Hochtemperaturereignisse berücksichtigt, bei denen die Filter- und/oder Abgastemperatur einen zum Rußabbrand erforderlichen Grenzwert überschreitet. Auch in diesem Fall erfolgt vorzugsweise eine Gewichtung der rußumsatz-relevanten Ereignisse, wobei insbesondere die vorgenannten Parameter Abgaszusammensetzung sowie Abgasmassenstrom und/oder Abgasvolumenstrom sowie die Dauer des Hochtemperaturereignisses berücksichtigt werden.

Die Summe aus eingetragener Rußmenge (Rußeintrag) sowie umgesetzter Rußmenge (Rußaustrag) ergibt die aktuelle absolute Rußbeladung des Partikelfilters als Rußmasse oder, bevorzugt, als dimensionslosen Kennwert.

Die aktuelle Rußbeladung wird zur Steuerung aktiver Maßnahmen herangezogen, insbesondere zur Auslösung einer Regeneration des Partikelfilters. Diese erfolgt vorzugsweise dann, wenn die ermittelte Rußbeladung einen vorbestimmten Schwellenwert überschreitet.

Zur Absicherung des Verfahrens sieht eine vorteilhafte Ausgestaltung vor, dass zusätzlich zu der ereignisbasierten Ermittlung der eingetragenen Rußmenge eine betriebsbasierte Ermittlung der eingetragenen Rußmenge durchgeführt wird. Diese erfolgt in Form eines integrierten Kraftstoffverbrauchs, einer integrierten zurückgelegten Fahrstrecke und/oder einer integrierten Betriebsdauer. Überschreitet dieser betriebsbasiert ermittelte Rußeintrag eine vorbestimmte Schwelle, so wird eine Regeneration ausgelöst, auch wenn der ereignisbasiert ermittelte Rußeintrag noch kein Regenerationserfordernis erkennen lässt. Die auf diese Weise erzwungene periodische Regeneration dient als Absicherung für den Fall, dass die erfindungsgemäße ereignisbasierte Ermittlung einmal doch nicht zu einem zuverlässigen Ergebnis führen sollte.

Ein weiterer Aspekt der vorliegenden Erfindung betrifft eine Steuereinheit, die zur Ausführung des erfindungsgemäßen Verfahrens zur Ermittlung der Rußbeladung des Partikelfilters eingerichtet ist. Die Steuereinheit kann in ein Motorsteuergerät integriert vorliegen oder als eigenständige Einheit ausgebildet sein. Die Steuereinheit kann einen Rechner und ein (vom Rechner lesbares) Speicherelement umfassen. Sie umfasst insbesondere einen computerlesbaren Algorithmus zur Ausführung des Verfahrens, also ein Computerprogramm in gespeicherter Form. Anders gesagt, im Speicherelement kann ein Programm abgelegt sein, welches bei wenigstens teilweiser Ausführung im Rechner die Schritte des erfindungsgemäßen Verfahrens zur Ermittlung einer Rußbeladung eines einer Brennkraftmaschine nachgeschalteten Partikelfilters in Abhängigkeit von einer in den Partikelfilter eingetragenen Rußmenge mit den Merkmalen oder einer Kombination der Merkmale gemäß dieser Darstellung ausführt. Zudem kann sie erforderliche Kennlinien oder Kennfelder in gespeicherter und computerlesbarer Form umfassen.

Die Erfindung betrifft ferner ein Kraftfahrzeug, insbesondere ein gleisloses Landfahrzeug, beispielweise ein Personenkraftwagen oder ein Lastkraftwagen, umfassend eine Brennkraftmaschine, einen Partikelfilter sowie eine Steuereinheit gemäß der Erfindung. Bei der Brennkraftmaschine handelt es sich vorzugsweise um einen Ottomotor, da dessen Rußemissionen sich besonders vorteilhaft mit dem erfindungsgemäßen Verfahren, also ereignisbasiert, modellieren lassen, wobei der Partikelfilter ein Ottopartikelfilter ist.

In einer Ausführung weist das Kraftfahrzeug die Brennkraftmaschine als alleinige Antriebsquelle auf. Nach einer alternativen Ausgestaltung ist das Kraftfahrzeug als Hybridfahrzeug ausgebildet, welches zusätzlich zur Brennkraftmaschine einen Elektromotor zum Fahrzeugantrieb aufweist.

In einer besonderen Ausführung wird der Betrieb der Brennkraftmaschine über ein Start-/Stopp-System gesteuert. Ein solches System führt bei Anhaltevorgängen des Fahrzeugs, beispielsweise vor einer Ampel, zu einem Abstellen der Brennkraftmaschine. Da Fahrzeuge mit einem Start-/Stopp-System zwangsläufig häufige Startereignisse aufweisen, kommt hier die erfindungsgemäße Ermittlung der Rußbeladung des Partikelfilters besonders vorteilhaft zum Tragen.

Weitere bevorzugte Ausgestaltungen der Erfindung ergeben sich aus den übrigen, in den abhängigen Ansprüchen genannten Merkmalen. Die Merkmale können einzeln, in Kombination oder sämtlich in einem erfindungsgemäßen Verfahren, einer erfindungsgemäßen Steuereinheit oder einem erfindungsgemäßen Kraftfahrzeug realisiert sein.

Die Erfindung wird nachfolgend in Ausführungsbeispielen unter Bezugnahme auf die beigefügten Zeichnungen erläutert. Es zeigen:

Figur 1     schematisch eine Abgasanlage gemäß einer ersten Ausgestaltung der vorliegenden Erfindung und

Figur 2     einen Vergleich der Rußrohemissionen eines Ottomotors und eines Dieselmotors gemessen über eine standardisierten Fahrzyklus.

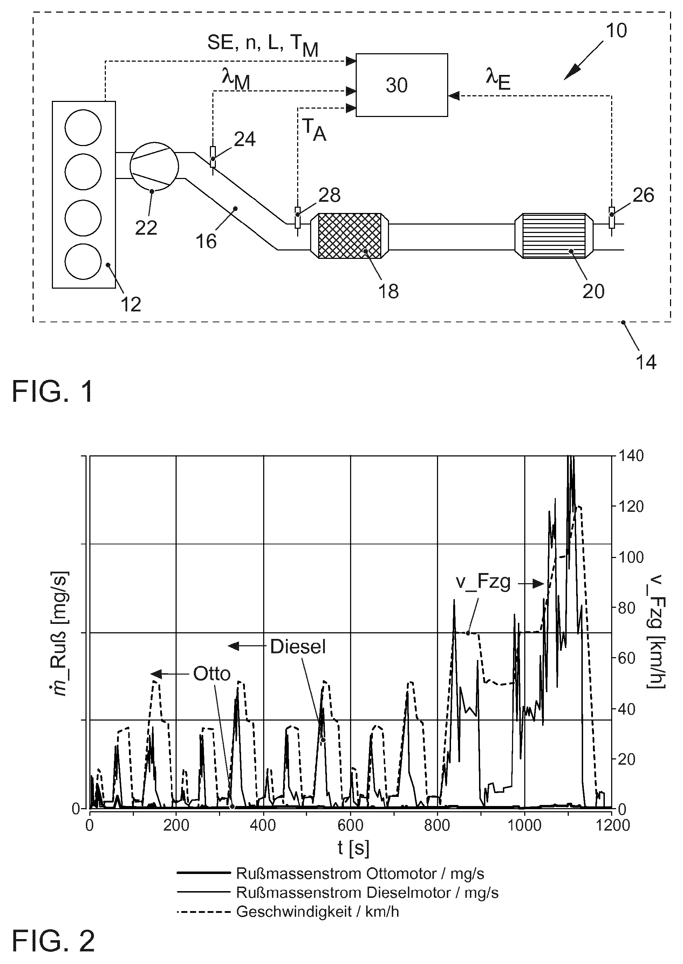

Figur 1 zeigt eine insgesamt mit 10 bezeichnete Abgasanlage, die strömungstechnisch mit einer fremdgezündeten Brennkraftmaschine 12 verbunden ist. Bei der Brennkraftmaschine 12 handelt es sich vorzugsweise um einen Ottomotor, d.h. einen mittels Fremdzündung gezündeten Verbrennungsmotor. Die Brennkraftmaschine 12 dient allein oder in Kombination mit einem Elektromotor als Antriebsquelle für ein hier mit 14 angedeutetes Fahrzeug.

Die Abgasanlage 10 umfass einen Abgaskanal 16, der mit den Zylindern der Brennkraftmaschine 12, insbesondere mit deren Auslasskanälen, strömungstechnisch in Verbindung steht und somit das Abgas der Brennkraftmaschine 12 aufnimmt. In dem Abgaskanal 16 ist ein Partikelfilter, insbesondere ein Ottopartikelfilter (OPF) 18 angeordnet. Der Partikelfilter 18 weist grundsätzlich einen vergleichbaren Aufbau beziehungsweise eine Topologie wie bekannte Dieselpartikelfilter (DPF) auf. Insbesondere umfasst er ein poröses, üblicherweise keramisches Substrat, das eine Vielzahl von axialen, parallel angeordneten Strömungskanälen aufweist. Dabei ist ein Teil der Strömungskanäle eingangsseitig geschlossen und der andere Teil ausgangsseitig geschlossen. Ein derartiger Filter wird auch als Wandstromfilter bezeichnet. Die eingangsseitig geschlossenen und ausgangsseitig geschlossenen Strömungskanäle sind wechselseitig angeordnet. Somit tritt das von der Brennkraftmaschine 12 kommende Abgas in die ausgangsseitig geschlossenen und eingangsseitig geöffneten Strömungskanäle des Partikelfilters 18 ein. Das Abgas wird gezwungen, durch die porösen Wandstrukturen der Kanäle zu strömen, wobei partikuläre Bestandteile des Abgases auf und in den porösen Wandstrukturen zurückgehalten werden. Von dort tritt das Abgas in die ausgangsseitig geöffneten und eingangsseitig geschlossenen Strömungskanäle, um den Partikelfilter 18 nachfolgend zu verlassen. Die vorstehend geschilderte Ausgestaltung des Partikelfilters 18 wird auch als Wandstromfilter (Wallflow-Filter) bezeichnet.

Optional kann der Partikelfilter 18 eine so genannte Washcoat-Beschichtung aufweisen. Der Washcoat besteht aus einem keramischen Material mit großer spezifischer Oberfläche, beispielsweise Aluminiumoxid ($Al_2O_3$), Zirkoniumoxid ($Zr_2O_3$), Titanoxid ($TiO_2$) oder anderen. Der Washcoat dient als Sauerstoffspeicher (OSC für *oxygen storage capacity*) und kann somit für Diagnosezwecke eingesetzt werden. Weiterhin optional kann die Washcoat-Beschichtung mit einem katalytischen Material beladen sein, insbesondere mit einem Edelmetall. Die katalytisch aktive Komponente liegt in einer möglichst feinpartikulären Verteilung auf dem Washcoat geträgert vor, um eine möglichst große katalytische Oberfläche zu bieten. Vorzugsweise kann hier eine katalytische Drei-Wege-Beschichtung vorhanden sein. Im Falle einer drei-wege-katalytischen Beschichtung umfasst das katalytische Material eine Kombination der Edelmetalle Platin, Palladium und/oder Rhodium, insbesondere eine Kombination aus Pt und Rh oder aus Pd und Rh, wobei Platin beziehungsweise Palladium die Umsetzung von HC und CO katalysieren und Rh die Umsetzung von NO$_x$.

Die Abgasanlage 10 kann ferner weitere Komponenten umfassen, beispielsweise einen dem Partikelfilter 18 nachgeschalteten Katalysator 20, bei dem es sich vorzugsweise um einen Drei-Wege-Katalysator handelt. Der Katalysator 20 weist ein Durchflusssubstrat auf, umfassend eine Vielzahl beidseitig geöffneter paralleler Strömungskanäle. Das Durchflusssubstrat kann in bekannter Weise als Metallsubstrat, vorzugsweise jedoch als keramisches Substrat vorliegen. Das Durchflusssubstrat des Katalysators 20 weist ebenfalls eine Washcoat-Beschichtung auf, die mit einem katalytischen Material beladen ist. Das katalytische Material ist im Falle eines Drei-Wege-Katalysators geeignet, die Abgasbestandteile Kohlenmonoxid (CO), Kohlenwasserstoff (HC) sowie Stickoxide (NO$_x$) umzusetzen. Zu diesem Zweck weist sie, wie bereits ausgeführt, vorzugsweise eine Kombination der Edelmetalle Platin und Rhodium oder Palladium und Rhodium auf.

Anstelle des Drei-Wege-Katalysators 20 oder zusätzlich zu diesem kann die Abgasanlage 10 weitere Komponenten zur Abgasnachbehandlung enthalten, beispielsweise einen weiteren Drei-Wege-Katalysator, insbesondere als motornah angeordneten Vorkatalysator, und/oder einen HC-Adsorber.

Die Abgasanlage 10 kann ferner eine Abgasturbine 22 aufweisen, die Teil eines hier nicht weiter dargestellten Abgasturboladers ist.

Ferner weist die Abgasanlage 10 eine geeignete Sensorik auf, mit der verschiedene Parameter des Abgases, beispielsweise Konzentrationen bestimmter Abgaskomponenten, die Temperatur des Abgases und/oder der verschiedenen Bauteile des Systems oder der Abgasmassen- oder -volumenstrom oder dergleichen erfasst werden können. Insbesondere weist im dargestellten Beispiel diese Sensorik eine erste Lambdasonde 24 auf, die an einer motornahen Position der Abgasanlage 10 vor dem Partikelfilter 18 angeordnet ist. Ferner ist eine zweite Lambdasonde 26 stromab des Katalysators 20 installiert. Eine dritte, hier nicht dargestellte Lambdasonde kann stromab des Filters 18 und vor dem Katalysator 20 vorhanden sein. Die Lambdasonden 24, 26 sowie die dritte Lambdasonde messen einen Sauerstoffanteil des Abgases. Die erste Lambdasonde 24 dient in bekannter Weise der Messung und Regelung des motorischen Luftverhältnisses, mit dem die Brennkraftmaschine 12 betrieben wird. Die zweite Lambdasonde 26 und gegebenenfalls die dritte Lambdasonde dienen der Überwachung und On-Board-Diagnostik des Katalysators 20 und des Filters 18. Ferner ist im dargestellten Beispiel ein Temperatursensor 28 stromauf des Partikelfilters 18 angeordnet, der eine Abgastemperatur T$_A$ misst, welche auf die Temperatur des Partikelfilters 18 schließen lässt. Alternativ kann der Temperatursensor 28 durch einen Modellwert ersetzt werden.

Die Signale sämtlicher Sensoren gehen in eine Steuereinrichtung 30 ein, welche die Steuerung einer Regeneration des Partikelfilters 18 steuert und zu diesem Zweck die Rußbeladung des Partikelfilters 18 ermittelt. Ferner empfängt die Steuereinrichtung 30 Signale, welche den Betriebspunkt und Betriebsparameter der Brennkraftmaschine 12 charakterisieren. Dies sind vorliegend insbesondere die Startereignisse SE der Brennkraftmaschine, ihre Drehzahl n und Last L sowie die Motortemperatur T$_M$.

Die Steuereinrichtung 30 ermittelt die Rußbeladung RB des Partikelfilters 18 als Summe der eingetragenen Rußmenge (Rußeintrag) RE und der umgesetzten Rußmenge (Rußaustrag) RA gemäß Gleichung 1.

$$RB = RE + RA \qquad \text{(Gl. 1)}$$

Dabei wird erfindungsgemäß der Rußeintrag RE unter ausschließlicher Berücksichtigung rußemissions-relevanter Ereignisse modelliert, wobei vorzugsweise Motorstartereignisse und/oder Hochlastsituationen der Brennkraftmaschine berücksichtigt werden. Im vorliegenden Beispiel soll dies anhand der Berücksichtigung der Startereignisse gemäß einer bevorzugten Ausführung anhand von Gleichung 2 erläutert werden.

$$RE = \sum_{i=0}(RW\_SE \cdot F_{TM} \cdot F_L \cdot F_\lambda)_i \qquad \text{(Gl. 2)}$$

Jedes Startereignis SE der Brennkraftmaschine 12 wird durch die Steuereinrichtung 30 registriert. Dem Startereignis SE ist ein fester Rußwert RW_SE zugeordnet, bei dem es sich vorzugsweise um einen dimensionslosen Kennwert, z.B. 1, handelt. Gleichzeitig mit Feststellung eines Startereignisses SE wird die Motortemperatur T$_M$ bestimmt. In Abhängigkeit von der Motortemperatur T$_M$ ermittelt die Steuereinrichtung 30 einen Motortemperatur-Gewichtungsfaktor F$_{TM}$ aus einer entsprechenden Kennlinie, welche den Motortemperatur-Gewichtungsfaktor F$_{TM}$ als Funktion der Motortemperatur T$_M$ darstellt. Insbesondere nimmt mit zunehmender Motortemperatur T$_M$ der Gewichtungsfaktor ab, um somit die mit abnehmender Motortemperatur zunehmende Rußrohemission des Motors zu berücksichtigen. Ferner werden über einen vorbestimmten Zeitraum nach dem Motorstartereignis die Motordrehzahl n sowie die Motorlast L ermittelt und ausgewertet. Aus einem entsprechenden Kennfeld ermittelt die Steuereinrichtung 30 einen Lastkollektiv-Gewichtungsfaktor F$_L$. Ebenfalls während des vorbestimmten Zeitfensters nach Motorstart wird das motorische Luftver-

hältnis $\lambda_M$ erfasst und ausgewertet. Hieraus ermittelt die Steuereinrichtung 30 einen Lambda-Gewichtungsfaktor $F_\lambda$. Sämtliche Gewichtungsfaktoren $F_{TM}$, $F_L$ und $F_\lambda$ werden durch Multiplikation auf den Rußwert RW_SE angewendet. Der Rußeintrag wird durch Aufsummierung sämtlicher Startereignisse gemäß Gleichung 2 gebildet.

Zusätzlich zur Bestimmung des beladungserhöhenden Rußeintrags RE, wird zudem der Rußaustrag RA, der sich beladungsmindernd auswirkt, bestimmt. Die Bestimmung von RA erfolgt vorzugsweise ebenfalls in ereignisbasierter Weise, beispielsweise gemäß Gleichung 3. Insbesondere werden zur Ermittlung des Rußaustrags RA Temperaturereignisse TE berücksichtigt, bei denen die Partikelfiltertemperatur (oder die Abgastemperatur $T_A$) eine bestimmte Temperaturschwelle überschreitet, welche für den Partikelabbrand ausreichend ist. Dabei wird jedem solchen Temperaturereignis TE ein Rußwert RW_TE zugeordnet, wobei es sich wiederum um eine Rußmasse oder, bevorzugt, um einen dimensionslosen Kennwert handelt. In Abhängigkeit von dem motorischen Luftverhältnis $\lambda_M$ wird ein Lambda-Gewichtungsfaktor $F_\lambda$ ermittelt. In Abhängigkeit von der Dauer, über welche die erhöhte Temperatur am Partikelfilter 18 vorliegt, wird ein Zeit-Gewichtungsfaktor $F_Z$ gebildet und ebenfalls auf den Rußwert RW_TE angewendet. Der Rußaustrag RA ergibt sich durch Aufsummieren sämtlicher auf diese Weise gewichteter Rußwerte sämtlicher Temperaturereignisse.

$$RA = \sum\nolimits_{i=0}(RW\_TE \cdot F_Z \cdot F_\lambda)_i \qquad \text{(Gl. 3)}$$

Die auf diese Weise gemäß Gleichung 1 ermittelte absolute Rußbeladung RB wird kontinuierlich mit einem entsprechenden Schwellenwert für die Rußbeladung verglichen. Überschreitet die Rußbeladung RB den Schwellenwert, so wird eine Regenerationsnotwendigkeit des Partikelfilters 18 festgestellt. Es werden dann Maßnahmen zur Anhebung der Partikelfiltertemperatur durchgeführt sowie zur Bereitstellung des erforderlichen Sauerstoffs im Abgas. Auf diese Weise wird der Abbrand der im Filter 18 gespeicherten Partikel ausgelöst und der Partikelfilter 18 regeneriert.

Figur 2 zeigt die auf einem Motorprüfstand gemessenen Rußmassenströme $\dot{m}$_Ruß eines Dieselmotors sowie eines Ottomotors, während die jeweilige Brennkraftmaschine entsprechend einem standardisierten Fahrzyklus mit einer vorgegebenen Geschwindigkeit v_Fzg betrieben wurde.

Es zeigt sich einerseits, dass die Rußemissionen des Ottomotors verglichen mit denen des Dieselmotors wesentlich geringer sind. Es ist ferner erkennbar, dass der Hauptanteil der Emissionen des Ottomotors mit dem Motorstart, insbesondere wie hier einem Motorkaltstart, sowie mit dem anschließenden Warmlauf verbunden sind. Geringfügige Rußemissionen werden zudem auch in Hochlastsituationen bei hohen Fahrzeuggeschwindigkeiten beobachtet. Diese sind umso geringer, je wärmer der Motor ist. Verglichen mit den Startemissionen sind die Hochlastemissionen jedoch vernachlässigbar.

Die Erfindung macht sich nun dieses Rußemissionsverhalten von Ottomotoren zu Nutze und berücksichtigt als Rußeintrag in den Partikelfilter 18 ausschließlich von rußemissions-relevanten Ereignissen, insbesondere von derjenigen Ereignissen, welche die mit dem Motorstart und dem daran anschließenden Warmlauf verbundenen Rußemissionen und optional ferner die durch die Hochlastsituationen verursachten Emissionen betreffen. Auf diese Weise wird ein einfaches und robustes Modell zur Ermittlung der Rußbeladung des Partikelfilters 18 bereitgestellt.

**Bezugszeichenliste**

| | |
|---|---|
| 10 | Abgasanlage |
| 12 | Brennkraftmaschine |
| 14 | Fahrzeug |
| 16 | Abgaskanal |
| 18 | Partikelfilter |
| 20 | Katalysator |
| 22 | Abgasturbine |
| 24 | erste Lambdasonde |
| 26 | zweite Lambdasonde |
| 28 | Temperatursensor |
| 30 | Steuereinrichtung |

**Patentansprüche**

**1.** Verfahren zur Ermittlung einer Rußbeladung (RB) eines einer Brennkraftmaschine (12) nachgeschalteten Partikelfilters (18) in Abhängigkeit von einer in den Partikelfilter (18) eingetragenen Rußmenge (RE), **dadurch gekennzeichnet, dass** für die Ermittlung der eingetragenen Rußmenge (RE) ausschließlich rußemissions-relevante Ereignisse erfasst und berücksichtigt werden, die in einem standardisierten Fahrzyklus einen vorbestimmten Mindestanteil von Rußemission an einer insgesamt von der Brennkraftmaschine (12) emittierten Rußemission verursachen, wobei der Mindestanteil von Rußemission der rußemissions-relevanten Ereignisse geringer als die insgesamt emittierte Rußemission ist.

2. Verfahren nach Anspruch 1, **dadurch gekennzeichnet, dass** solche rußemissions-relevante Ereignisse erfasst und berücksichtigt werden, die mindestens 90 % der in einem standardisierten Fahrzyklus insgesamt von der Brennkraftmaschine (12) emittierten, massenbezogenen Rußemission verursachen.

3. Verfahren nach Anspruch 2, **dadurch gekennzeichnet, dass** solche rußemissions-relevante Ereignisse erfasst und berücksichtigt werden, die mindestens 95% der in einem standardisierten Fahrzyklus insgesamt von der Brennkraftmaschine (12) emittierten, massenbezogenen Rußemission verursachen.

4. Verfahren nach Anspruch 1, **dadurch gekennzeichnet, dass** für die Ermittlung der eingetragenen Rußmenge (RE) nur eine Auswahl sämtlicher rußemissions-relevanter Ereignisse erfasst und berücksichtigt wird.

5. Verfahren nach Anspruch 1, **dadurch gekennzeichnet, dass** die rußemissions-relevanten Ereignisse einen Motorstart (SE) umfassen.

6. Verfahren nach Anspruch 1, **dadurch gekennzeichnet, dass** die rußemissions-relevanten Ereignisse eine Hochlastsituation umfassen.

7. Verfahren nach Anspruch 1, **dadurch gekennzeichnet, dass** dem rußemissions-relevanten Ereignis in Abhängigkeit von der Art des Ereignisses ein Rußwert (RW) zugeordnet ist und zur Ermittlung der eingetragenen Rußmenge (RE) die Rußwerte (RW) aufsummiert werden.

8. Verfahren nach Anspruch 7, **dadurch gekennzeichnet, dass** der Rußwert (RW) gewichtet wird, wobei die Gewichtung in Abhängigkeit von Umgebungsparametern und/oder Betriebszuständen der Brennkraftmaschine (12) bestimmt wird.

9. Verfahren nach Anspruch 8, **dadurch gekennzeichnet, dass** die Umgebungsparameter und/oder Betriebszustände der Brennkraftmaschine (12) eine Motortemperatur, insbesondere eine Motorstarttemperatur, eine Umgebungstemperatur, ein Lastkollektiv während einer dem Motorstart anschließenden Warmlaufphase, ein Verbrennungsluftverhältnis während einer dem Motorstart anschließenden Warmlaufphase und/oder eine Kraftstoffqualität umfassen.

10. Verfahren nach Anspruch 1, **dadurch gekennzeichnet, dass** die Ermittlung der Rußbeladung (RB) des Partikelfilters (18) ferner in Abhängigkeit von einer beladungsmindernden im Partikelfilter (18) umgesetzten Rußmenge (RA) erfolgt.

11. Verfahren nach Anspruch 1, **dadurch gekennzeichnet, dass** zusätzlich zu der ereignisbasierten Ermittlung der eingetragenen Rußmenge (RE) eine betriebs-basierte Ermittlung der eingetragenen Rußmenge durchgeführt wird, welche in Form eines integrierten Kraftstoffverbrauchs, einer integrierten Fahrstrecke und/oder einer integrierten Betriebsdauer erfolgt.

12. Verfahren nach Anspruch 1, **dadurch gekennzeichnet, dass** als Brennkraftmaschine (12) ein Ottomotor und als Partikelfilter ein Ottopartikelfilter (OPF) verwendet werden.

13. Steuereinheit (30), die zur Ausführung des Verfahrens nach Anspruch 1 eingerichtet ist.

14. Kraftfahrzeug (14) umfassend eine Brennkraftmaschine (12), einen Partikelfilter (18) sowie eine Steuereinheit (30) nach Anspruch 13.

15. Kraftfahrzeug (14) nach Anspruch 14, **dadurch gekennzeichnet, dass** die Brennkraftmaschine (12) ein Ottomotor und der Partikelfilter (18) ein Ottopartikelfilter (OPF) ist.

**Claims**

1. Method for determining a soot load (RB) in a particulate filter (18) connected downstream of an internal combustion engine (12), as a function of a quantity of soot (RE) which has been input into the particulate filter (18), **characterized in that** for the determination of the quantity of soot (RE) which has been input exclusively soot-emission-relevant events are registered and taken into account which, in a standardized driving cycle, cause a predetermined minimum proportion of soot emissions in the soot emission which is emitted overall by the internal combustion engine (12), wherein the minimum proportion of soot emission of the soot-emission-relevant events is lower than the total soot emission emitted.

2. Method according to Claim 1, **characterized in that** such soot-emission-relevant events which cause at least 90% of the total mass-related soot emission emitted by the internal combustion engine (12) in a standardized driving cycle are registered and taken into account.

3. Method according to Claim 2, **characterized in that** such soot-emission-relevant events which cause at least 95% of the total mass-related soot emission emitted by the internal combustion engine (12) in a standardized driving cycle are registered and taken into account.

4. Method according to Claim 1, **characterized in that** only a selection of all the soot-emission-relevant events are registered and taken into account for the determination of the quantity of soot (RE) which is input.

5. Method according to Claim 1, **characterized in that** the soot-emission-relevant events comprise an engine start (SE).

6. Method according to Claim 1, **characterized in that** the soot-emission-relevant events comprise a high load situation.

7. Method according to Claim 1, **characterized in that** a soot value (RW) is assigned to the soot-emission-relevant event as a function of the type of event, and the soot values (RW) are summed in order to determine the quantity of soot (RE) which is input.

8. Method according to Claim 7, **characterized in that** the soot value (RW) is weighted, wherein the weighting is determined as a function of ambient parameters and/or operating states of the internal combustion engine (12).

9. Method according to Claim 8, **characterized in that** the ambient parameters and/or operating states of the internal combustion engine (12) comprise an engine temperature, in particular an engine starting temperature, an ambient temperature, a load collective during a warming up phase subsequent to the engine start, a combustion air ratio during a warming up phase subsequent to the engine start and/or a fuel quality.

10. Method according to Claim 1, **characterized in that** the determination of the soot load (RB) of the particulate filter (18) is also carried out as a function of a load-reducing quantity of soot (RA) which is converted in the particulate filter (18).

11. Method according to Claim 1, **characterized in that** in addition to the event-based determination of the quantity of soot (RE) which is input, an operation-based determination of the quantity of soot which is input is carried out, said determination taking place in the form of an integrated fuel consumption, an integrated driving distance and/or an integrated operating period.

12. Method according to Claim 1, **characterized in that** a spark-ignition engine is used as the internal combustion engine (12), and a spark-ignition engine particulate filter (OPF) is used as the particulate filter.

13. Control unit (30) which is configured to carry out the method according to Claim 1.

14. Motor vehicle (14) comprising an internal combustion engine (12), a particulate filter (18) and a control unit (30) according to Claim 13.

15. Motor vehicle (14) according to Claim 14, **characterized in that** the internal combustion engine (12) is a spark-ignition engine, and the particulate filter (18) is a spark-ignition engine particulate filter (OPF).

**Revendications**

1. Procédé de détermination d'une charge en suies (RB) d'un filtre à particules (18) connecté en aval d'un moteur à combustion interne (12) en fonction d'une quantité de suies (RE) enregistrée dans le filtre à particules (18), **caractérisé en ce qu'**uniquement des événements significatifs en terme d'émissions de suies sont détectés et pris en compte pour la détermination de la quantité de suies (RE) enregistrée, lesdits événements provoquant, dans un cycle de conduite standardisé, une teneur minimale prédéterminée d'émission de suies par rapport à une totalité d'émission de suies émise par le moteur à combustion interne (12), la teneur minimale en émission de suies des événements significatifs en terme d'émissions de suies étant davantage réduite que la totalité de l'émission de suies émise.

2. Procédé selon la revendication 1, **caractérisé en ce que** les événements significatifs en terme d'émissions de suies détectés et pris en compte sont ceux provoquant au moins 90 % de la totalité, en masse, de l'émission de suies émise dans un cycle de conduite standardisé par le moteur à combustion interne (12).

3. Procédé selon la revendication 2, **caractérisé en ce que** les événements significatifs en terme d'émissions de suies détectés et pris en compte sont ceux provoquant au moins 95 % de la totalité, en masse, de l'émission de suies émise dans un cycle de conduite standardisé par le moteur à combustion interne (12).

4. Procédé selon la revendication 1, **caractérisé en ce que** seule une sélection de l'ensemble des événements significatifs en terme d'émissions de suies sont détectés et est pris en compte pour la détermination de la quantité de suies (RE) enregistrée.

5. Procédé selon la revendication 1, **caractérisé en ce que** les événements significatifs en terme d'émissions de suies comprennent un démarrage de moteur (SE).

6. Procédé selon la revendication 1, **caractérisé en ce que** les événements significatifs en terme d'émissions de suies comprennent une situation de forte charge.

7. Procédé selon la revendication 1, **caractérisé en ce qu'**une valeur de suies (RW) est associée à l'événement significatif en terme d'émissions de suies en fonction du type d'événement et que pour déterminer la quantité de suies (RE) enregistrée, les valeurs de suies (RW) sont additionnées.

8. Procédé selon la revendication 7, **caractérisé en ce que** la valeur de suies (RW) est pondérée, la pondération étant définie en fonction des paramètres environnementaux et/ou des états de fonctionnement du moteur à combustion interne (12).

9. Procédé selon la revendication 8, **caractérisé en ce que** les paramètres environnementaux et/ou les états de fonctionnement du moteur à combustion interne (12) comprennent une température de moteur, notamment une température de démarrage du moteur, une température ambiante, un collectif de charge pendant une phase de chauffe du moteur suivant le démarrage du moteur, un rapport d'air de combustion pendant une phase de chauffe du moteur suivant le démarrage du moteur et/ou une qualité de carburant.

10. Procédé selon la revendication 1, **caractérisé en ce que** la détermination de la charge en suies (RB) du filtre à particules (18) se produit en outre en fonction d'une quantité de suies (RA) transformée dans le filtre à particules (18) et en réduisant la charge.

11. Procédé selon la revendication 1, **caractérisé en ce qu'**une détermination de la quantité de suies enregistrée basée sur le fonctionnement est réalisée en sus de la détermination de la quantité de suies (RE) enregistrée basée sur les événements, ladite détermination étant réalisée sous la forme d'une consommation de carburant intégrée, d'un tronçon de conduite intégré et/ou d'une durée de fonctionnement intégrée.

12. Procédé selon la revendication 1, **caractérisé en ce que** le moteur à combustion interne (12) utilisé est un moteur à allumage par étincelle et que le filtre à particules est un filtre à particules de type Otto (OPF).

13. Unité de commande (30) conçue pour mettre en oeuvre le procédé selon la revendication 1.

14. Véhicule automobile (14) comprenant un moteur à combustion interne (12), un filtre à particules (18) ainsi qu'une unité de commande (30) selon la revendication 13.

15. Véhicule automobile (14) selon la revendication 14, **caractérisé en ce que** le moteur à combustion interne (12) est un moteur à allumage par étincelle et que le filtre à particules (18) est un filtre Otto (OPF).

FIG. 1

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19961159 A1
- DE 102011109068 A1
- DE 10014224 A1
- DE 102010028852 A1
- DE 102010054414 A1
- DE 602004008862 T2
- AT 501102 A1
- WO 2006055992 A2